Europäisches Patentamt

European Patent Office

Office européen des brevets

(19)

(11) Numéro de publication: **0 193 797**
**B1**

## (12) FASCICULE DE BREVET EUROPÉEN

(45) Date de publication du fascicule du brevet:
21.03.90

(21) Numéro de dépôt: **86102180.6**

(22) Date de dépôt: **20.02.86**

(51) Int. Cl. ⁵ : **G 07 F 11/04, B 65 H 3/44,
B 65 G 47/91**

(54) Distributeur automatique d'articles plats.

(30) Priorité: **25.02.85 FR 8502673**

(43) Date de publication de la demande:
**10.09.86 Bulletin 86/37**

(45) Mention de la délivrance du brevet:
**21.03.90 Bulletin 90/12**

(84) Etats contractants désignés:
**DE FR GB NL**

(56) Documents cité:
**EP-A-0 091 058
DE-A-2 140 214
DE-A-2 431 901
DE-A-3 218 189
FR-A-1 223 578
FR-A-1 526 949
US-A-3 655 092**

(73) Titulaire: **ALCATEL SATMAM
113 rue Jean-Marin Naudin
F-92220 Bagneux (FR)**

(72) Inventeur: **Dimur, Gérard
109 Rue des Templiers
F-91360 Epinay-sur-Orge (FR)**
Inventeur: **Haroutel, Jean-Claude
21 Avenue du Panorama
F-91400 Orsay (FR)**

(74) Mandataire: **Weinmiller, Jürgen
Lennéstrasse 9 Postfach 24
D-8133 Feldafing (DE)**

EP 0 193 797 B1

LIBERGRAF, STOCKHOLM 1990

## Description

La présente invention se rapporte aux distributeurs automatiques d'articles plats, en particulier d'emballages postaux de différents types tels que cartons d'emballage présentés pliés, de plusieurs formats, et enveloppes matelassées ou d'articles plats d'une autre gamme, ayant entre eux des dimensions et/ou formes différentes.

De tels distributeurs sont prévus pour être d'accès au public. Ils assurent la délivrance d'un article sélectionné par l'utilisateur, parmi ceux qui y sont stockés, contre le paiement de cet article sélectionné.

Parmi les distributeurs de ce type, on connaît par la demande de brevet français publiée sous le n° 8 211 173, au nom de la demanderesse, un distributeur d'articles plats, en particulier d'emballages postaux, dans lequel les articles sont disposés les uns sur les autres en pile verticale. Ces emballages sont d'une même catégorie, ils peuvent présenter entre eux des tolérances de l'ordre du centimètre ou de quelques centimètres sur leur largeur et leur longueur et de quelques millimètres sur leur épaisseur.

Dans ce type de distributeur connu, une pluralité de cames assurent la retenue de la pile d'articles. Ces cames sont actionnables à partir d'une commande manuelle de délivrance d'un article, le dernier de la pile; elles s'effacent alors sous la pile. Elles sont couplées à un jeu d'aiguilles qui, tandis que les cames s'effacent sous la pile, viennent s'insérer dans la pile pour immobiliser l'avant dernier article de la pile et ainsi retenir les articles autres que le dernier qui est libéré.

La structure de ce distributeur fait qu'il se prête mal à la distribution d'articles de forme et dimensions différentes, tout en présentant un encombrement acceptable pour une exploitation en salles.

On connaît également par le document US-A-3 655 092 un distributeur automatique d'articles plats, de plusieurs types différents, répondant à la définition du préambule de la revendication 1. Ce distributeur se présente sous la forme d'une armoire fermée par une porte à travers laquelle chaque article distribué est rendu accessible. L'armoire contient une pluralité de magasins pour les différents types d'article en pile. Ces magasins sont agencés en au moins une colonne de stockage en ménageant entre eux des intervalles d'accès à des moyens d'extraction de l'article supérieur de chaque pile.

Dans ce distributeur connu, les magasins sont individuellement équipés de moyens d'extraction de l'article supérieur de chaque pile. Ces moyens sont identiques entre eux, d'un magasin à un autre. Ils sont portés élastiquement par un même guide pour les magasins d'une même colonne. Ils comportent essentiellement une plaque de pression reposant sur l'article supérieur du magasin concerné et entraînée horizontalement par un moteur, en constituant un chariot horizontal affecté à ce magasin, pour l'extraction de l'article supérieur. Cette plaque présente, à cet effet, un moyen de prélèvement de l'article de sa pile, constitué par un bord épaulé s'étendant le long et devant l'article; ce bord accroche l'article et le dégage de la pile quand la plaque est entraînée. Une glissière reçoit l'article prélevé de la pile pour le faire glisser jusqu'à l'accès dans la porte.

La présente invention a pour but de permettre une distribution automatique d'articles de types différents et pouvant varier en cours d'exploitation en fonction des demandes.

La présente invention a pour objet un distributeur automatique d'articles plats comportant, dans une armoire fermée par une porte présentant une corbeille de réception d'articles, une pluralité de magasins de stockage d'articles, en pile et par type, agencés en au moins une colonne, avec des intervalles d'accès individuels entre eux, et des moyens d'extraction et de distribution d'articles comportant eux-mêmes un chariot horizontal monté mobile sur une pièce de guidage pour le prélèvement de l'un des articles et sa délivrance dans ladite corbeille, caractérisé en ce que lesdits moyens d'extraction et de distribution d'articles comportent en outre un chariot vertical s'étendant transversalement devant l'ensemble des magasins, et monté mobile sur des guides verticaux, ledit chariot vertical étant entraîné par un premier moteur et portant ledit chariot horizontal ce dernier étant mobile grace à un second moteur le long d'une pièce de guidage solidaire dudit chariot vertical sur lequel ladite pièce de guidage s'étend transversalement entre la porte et lesdits magasins, une tête de préhension d'articles fixée audit chariot horizontal sur sa partie terminale située du côté desdits magasins, et des moyens de basculement dudit chariot horizontal sur sa pièce de guidage, en fin de course dudit chariot horizontal vers ladite porte, pour sa mise en position sensiblement verticale au-dessus de l'entrée des articles dans ladite corbeille.

Selon une particularité du distributeur, les moyens d'extraction et de distribution d'articles comportent, en outre, un troisième chariot, dit chariot longitudinal monté mobile sur un axe horizontal de guidage porté par ledit chariot vertical, sur lequel ledit axe de guidage s'étend selon sa longueur, et portant ledit chariot horizontal, et un troisième moteur d'entraînement dudit chariot longitudinal sur son axe de guidage.

En particulier, ledit chariot horizontal est constitué par un bras monté mobile sur la surface inférieure d'une cage de guidage, à ouverture longitudinale dans sa surface inférieure pour le passage d'au moins ladite tête de préhension qui lui est extérieure.

Selon une autre particularité, ledit bras est tracté par un moyen d'entraînement couplé audit second moteur et lié au bras en une zone décalée de son centre vers son extrémité opposée à celle portant la tête de préhension et dite seconde extrémité, cette seconde extrémité portant des moyens d'appui sur la surface supérieure de la cage de guidage.

Selon une autre particularité, une fenêtre dans la surface supérieure de la cage de guidage du bras, en fin de course du bras vers la porte du distributeur, permet l'escamotage de la seconde extrémité du bras et son basculement.

Les caractéristiques et avantages de la présente invention apparaîtront au cours de la description d'un mode de réalisation du distributeur, donné à titre d'exemple et illustré dans les dessins annexés. Dans ces dessins:

- la figure 1 est une vue en perspective du distributeur selon l'invention,
- la figure 2 représente la face avant, ou porte du distributeur, vue du côté intérieur au distributeur,
- la figure 3 est une vue de face du distributeur sans porte,
- la figure 4 est une vue en coupe du distributeur, selon la ligne IV - IV de la figure 3, montré équipé de sa porte avant,
- la figure 5 est une vue de la partie notée V de la figure 4,
- la figure 6 est une vue partielle de côté selon la flèche VI de la figure 5,
- les figures 7, 8 et 9 sont trois autres vues de la partie représentée dans la figure 4, permettant avec la figure 4 d'expliquer le fonctionnement du distributeur selon l'invention.

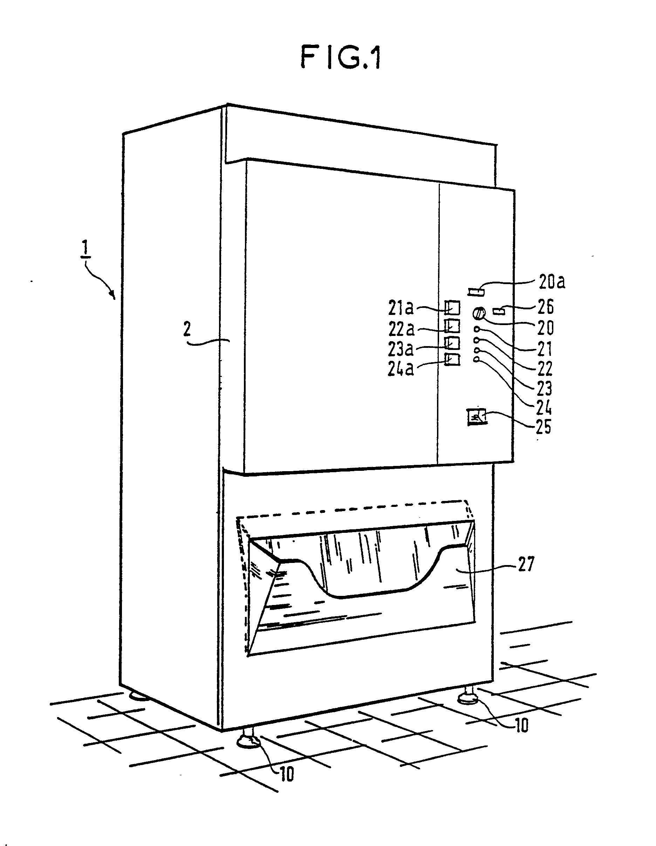

En regard de la figure 1, on voit que le distributeur automatique d'articles plats selon l'invention se présente sous la forme générale d'une armoire 1 fermée sur sa face avant par une porte 2 faisant saillie.

L'armoire 1 fermée par la porte 2 constitue l'habillage extérieur du distributeur, qui assure la protection des articles qui y sont stockés ainsi que celle des moyens d'extraction et de délivrance des articles et de leurs moyens de commande. Cet habillage est de conception robuste.

Ce distributeur est référencé au sol par quatre pieds 10 qui permettent son installation en salle ou hall sans scellement à un mur, par exemple dans un bureau de poste, en particulier pour la distribution d'emballages postaux, ou hall commercial, pour la distribution d'articles d'une autre gamme tels que des journaux.

La face avant ou porte 2 du distributeur porte les éléments nécessaires à son utilisation. Ainsi qu'illustré, elle porte une fente 20 d'introduction des pièces pour le paiement d'un article souhaité, avec une fenêtre d'affichage 20a des sommes introduites, la fente 20 étant calibrée en longueur et largeur pour assurer une première sélection des pièces. Elle porte des boutons 21 à 24 de sélection d'articles, dans l'exemple donné quatre boutons pour quatre types d'articles possibles, et des plaques d'identification des types d'articles avec leur prix, 21a à 24a, ces dernières étant à fenêtres de signalisation de mention "épuisé" lorsque le lot d'articles correspondant est épuisé. Elle porte aussi une sébile 25 à volet d'interdiction accès vers l'intérieur, pour le rendu de monnaie ou le cas échéant des pièces introduites.

Une fenêtre de signalisation générale 26 permet un affichage de mentions "en service" ou "hors service", à proximité de la fente 20 d'introduction des pièces; lors de l'affichage de la mention "hors service" la fente 20 d'introduction des pièces est fermée. Dans sa partie basse, la porte porte une corbeille 27 de réception d'articles délivrés, conçue pour permettre une prise aisée des articles délivrés tout en minimisant les possibilités d'accès à l'intérieur du distributeur.

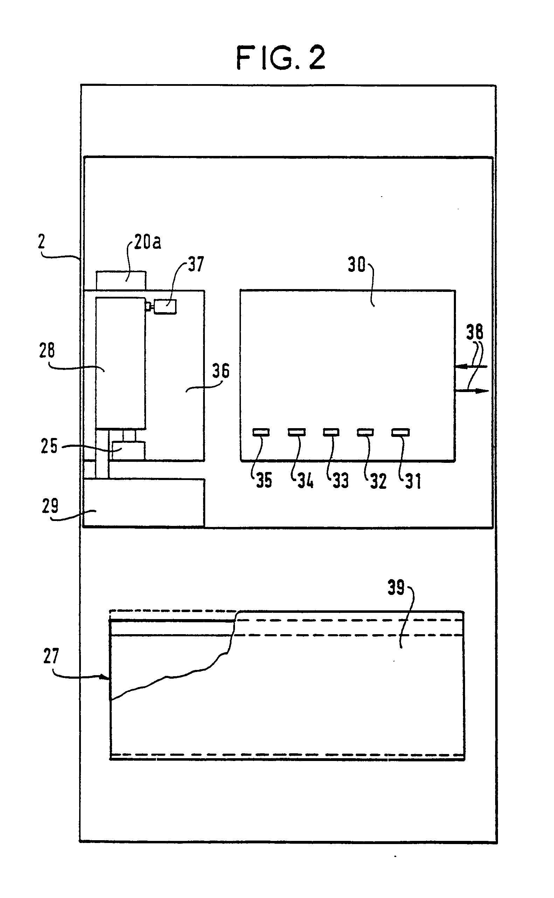

Cette porte 2 supporte aussi, mais sur sa face intérieure, ainsi que montré dans la figure 2, un système 28 de sélection et de comptabilisation de pièces communiquant avec une caisse 29. Le système 28 est relié à la fente 20 de laquelle elle reçoit les pièces introduites, il est également relié à la sébile 25 de rendu de monnaie ouverte sur la face avant. Ce système 28 est en tant que tel de type connu; il est à sélecteur électronique ou à sélecteur mécanique, et à précaisse qui contrôle les pièces introduites de différents types possibles admissibles et rejette celles non acceptées et à moyen de comptabilisation qui reçoit les informations du sélecteur et autorise la distribution du produit demandé dès que la somme introduite est au moins égale au prix de ce produit et qui assure le rendu de monnaie.

Sur sa face intérieure la porte 2 supporte également un ensemble de gestion 30. Cet ensemble de gestion comporte essentiellement quatre compteurs d'articles délivrés 31 à 34 affectés aux quatre types d'articles emmagasinés dans le distributeur et un compteur totalisateur 35 totalisant les sommes encaissées. Ces compteurs sont repérés au niveau de leurs fenêtres d'affichage. L'ensemble de gestion est relié par un circuit électronique et de raccordement 36 au système de sélection et comptabilisation de pièces 28. Il commande la signalisation des sommes introduites, à chaque demande d'article, et la visualisation générale de l'état "en service" ou "hors service" de l'appareil avec le cas échéant la fermeture de la fente 20 par actionnement d'un électro-aimant 37. Il gère surtout la distribution des produits demandés en recevant et délivrant les signaux de commande appropriés, sur des entrées/sorties de commande schématisées en 38. Il commande également pour chaque article délivré l'encaissement des pièces introduites et le cas échéant le rendu de monnaie.

Dans la partie basse de la porte 2, la corbeille 27 de réception d'articles délivrés vient former sur la face intérieure de la porte un volet déflecteur 39 assurant un guidage de l'article à son entrée dans la corbeille.

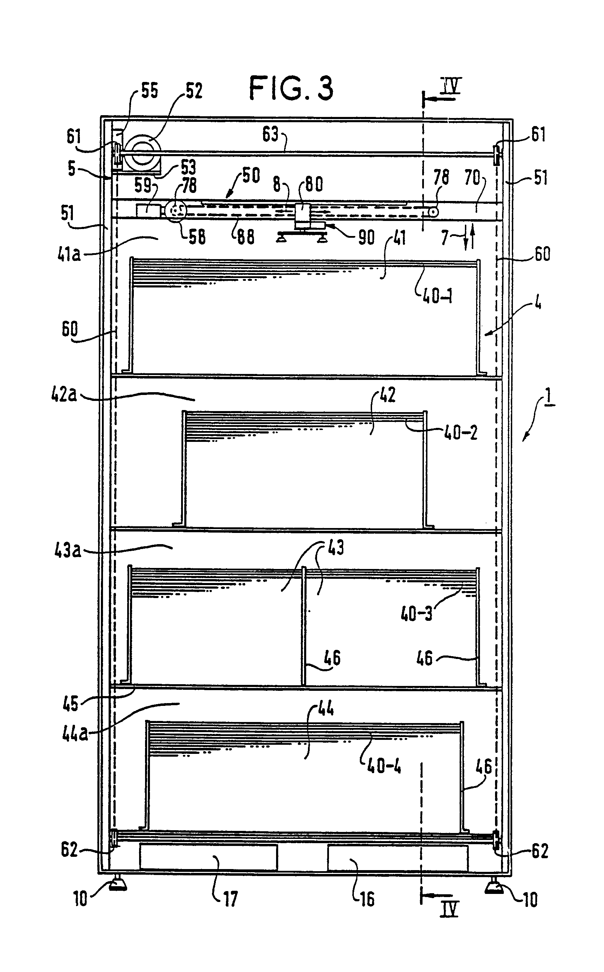

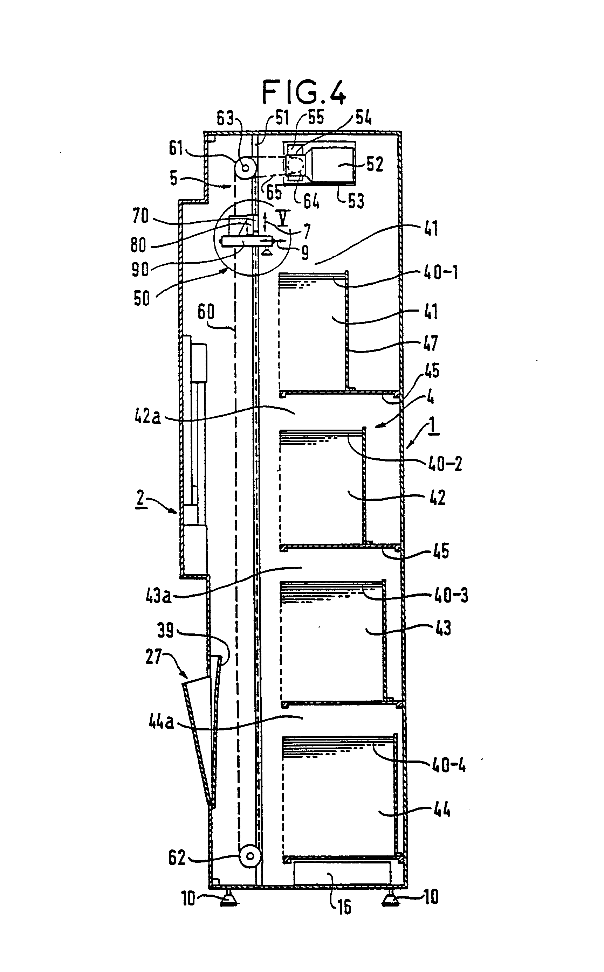

En regard des figures 3 et 4, on voit que l'armoire 1 ou châssis définit intérieurement un volume 4 de stockage d'articles différents, occupant la majeure partie de sa hauteur. Ce volume 4 ménage à l'avant de l'armoire, entre lui et la porte 2 avec les équipements de sa face intérieure, un espace affecté à un mécanisme d'extraction et de distribution d'articles 5.

Le volume 4 forme une colonne verticale de stockage, également désignée sous la référence 4, supportée par le châssis et organisée pour définir quatre types de magasins 41, 42, 43, 44 superposés, pour les quatre types d'articles tels que repérés en 40-1 à 40-4. A cet effet, cette colonne de stockage 4 est divisée en quatre étages par des tablettes horizontales telles que 45 portées par le châssis des cloisons latérales telles que 46 et arrière telles que 47 montées de manière réglable sur les tablettes horizontales limitent les magasins qu'elles forment sur ces tablettes aux dimensions des articles qui y sont disposés en pile.

Dans l'agencement illustré, ainsi que visible dans la figure 3, l'un des magasins, le magasin 43, est rendu double sur sa tablette horizontale par une cloison médiane commune, également repérée par la référence 46, pour le stockage d'articles suffisamment petits en deux piles verticales côte à côte. Les autres magasins 41, 42 et 44 sont des magasins simples, ils sont centrés sur l'axe vertical de la colonne de stockage en étant adaptés aux dimensions des articles qu'ils doivent recevoir.

Dans la colonne de stockage 4, les magasins 41 à 44 ont leur face avant, non référencée, ouverte. Ils ont également leur face supérieure, non référencée, ouverte, cette dernière est en outre décalée de la tablette horizontale 45 formant le fond du magasin directement supérieur au magasin considéré, ou présentant au-dessus d'elle un intervalle libre correspondant, pour le magasin supérieur 41. Ces intervalles sont désignés chacun par la référence du magasin concerné, accompagnée de la lettre a. Ils constituent les accès d'extraction d'articles de ces magasins, pour le mécanisme 5 de distribution d'articles.

Au bas de l'armoire 1, sous la colonne de stockage des articles 4, sont montés un circuit d'alimentation électrique 16 et une pompe à vide 17. Le circuit d'alimentation 16 est relié aux équipements supportés par la porte ainsi qu'au mécanisme de distribution 5. La pompe à vide 17 est reliée au mécanisme de distribution 5, sous la commande du circuit de gestion monté sur la porte 2.

Le mécanisme d'extraction et de distribution d'articles 5 est disposé devant la colonne de stockage des articles 4, sur sa largeur. Il est supporté par le châssis 1. Il comporte essentiellement un ensemble de chariots 50 monté sur deux rails latéraux de guidage 51, disposés verticalement et fixés au châssis. Cet ensemble 50 est entraîné sur ses rails par un moteur 52 monté au-dessus de la colonne de stockage des articles 4, sur une console support 53 fixée au châssis. Le moteur 52 est relié par une boîte de couplage 54, à pignons de couplage à 90°, d'une part à des moyens d'entraînement de l'ensemble de chariots 50 et d'autre part à un codeur 55.

Ces moyens d'entraînement sont constitués par deux chaînes latérales telles 60, montées le long de l'un et l'autre des rails, chacune entre un pignon de transmission 61 et un pignon de renvoi 62. Les deux pignons de transmission 61 sont couplés par un arbre de transmission 63 s'étendant entre les rails 51, l'un des pignons de transmission 61 est entraîné par l'un des pignons de sortie de la boîte de couplage 54, visible en 64, par une chaîne de couplage 65.

Le codeur 55 est de type en tant que tel connu. Il est par exemple à disque entraîné en synchronisme avec le moteur, et présentant des perforations ou autres repères ou marques et à cellule de détection de défilement de ces perforations ou autres repères ou marques à son droit. Il fournit des impulsions en synchronisme avec la vitesse du moteur, qui traduisent le déplacement vertical, dans un sens ou l'autre, de l'ensemble 50 le long des rails 51.

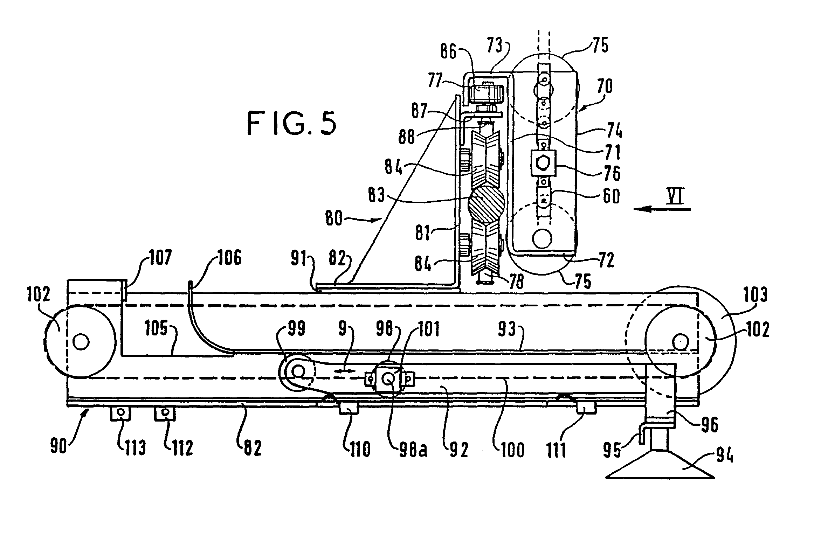

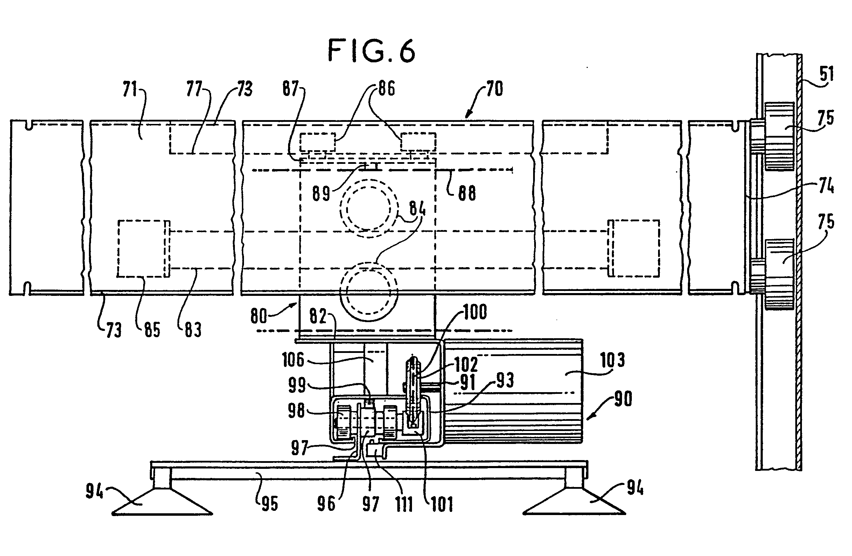

L'ensemble 50 comporte trois chariots, l'un 70 dit chariot vertical, affecté à la sélection de l'étage dans la colonne de stockage 4 et entraîné sur les rails 51 par le moteur 52, un second 80 dit chariot longitudinal affecté à la sélection de l'un des magasins doubles d'un même étage et le troisième 90 dit chariot horizontal affecté à l'extraction d'un article de l'un des magasins. Le chariot vertical 70 porte le chariot longitudinal 80 qui lui même porte le chariot horizontal 90. Ces chariots ont simplement été repérés dans les figures 3 et 4, ils sont décrits en détail, avec leur montage dans le distributeur, en se rapportant plus particulièrement aux figures 5 et 6.

Cet agencement des articles sur une colonne de stockage 4 définit un module de stockage. Dans ce module, l'ensemble des chariots 50 est dans sa position de repos avantageusement situé sensiblement à mi-hauteur de la colonne de stockage 4 et à mi-largeur de la colonne de stockage 4 dans les figures 3 et 4 il a été représenté au dessus de la colonne pour des raisons de clarté des dessins. Ce choix de la position de repos sensiblement à mi-hauteur de la colonne 4 permet une meilleure répartition du temps de recherche.

En variante, non illustrée, le distributeur d'articles peut être agencé en plusieurs modules de stockage définis par des colonnes de stockage telles que la colonne 4 précédente, disposées côte à côte. Le mécanisme 5 sera alors affecté à l'ensemble des modules de stockage devant lequel il s'étend sur sa largeur.

Le chariot vertical 70 est monté entre la paire de rails 51. Ces rails sont profilés en U à branches rabattues légèrement vers l'intérieur et ont leurs ouvertures se faisant face. Ce chariot vertical 70 est formé essentiellement par un profilé se présentant sous la forme générale d'une double cornière ayant une branche verticale 71 et deux branches horizontales, l'une inférieure 72, l'autre supérieure 73, s'étendant d'un côté et de l'autre de la branche verticale 71. Sur ce profilé, une pièce terminale 74 est rapportée à chacune de ses extrémités, sensiblement sur sa hauteur et sur la largeur de la branche inférieure 72. Elle porte sur sa face extérieure une paire de galets 75 engagés dans le rail 51 correspondant et sur sa face intérieure une pièce 76 d'accrochage à la chaîne 60 correspondante, pour l'entraînement du chariot 70.

Le chariot longitudinal 80 se présente sous la forme d'une pièce en cornière à branche verticale 81 et branche horizontale 82; il est porté par le chariot vertical 70 et monté coulissant sur ce chariot vertical 70, selon la longueur de celui-ci. A cet effet, le chariot longitudinal 80 est monté sur un axe de guidage horizontal 83 sur lequel il est rendu coulissant par une paire de galets 84 libres en rotation sur leurs axes horizontaux respectifs fixés au dos de sa branche verticale 81. Cet axe horizontal de guidage 83 est fixé à la branche verticale du chariot vertical 70 par deux pièces terminales de liaison telles que 85. Une autre paire de galets 86, d'axes verticaux fixés sur une patte en équerre 87 rapportée sur la partie supérieure de la branche verticale 81 du chariot longitudinal, contribue à son guidage et son maintien sur le chariot vertical. Cette dernière paire de galets est engagée sous la branche supérieure 73 du chariot vertical présentant, sur la longueur de la course possible du chariot longitudinal, un bord rabattu vertical 77, et entre lequel et la partie de la branche verticale 71 en regard les galets 86 sont en appui et roulent.

Pour son entraînement, ainsi qu'il apparaît plus nettement dans la figure 3, une chaîne d'entraînement symbolisée en 88 est fixée au chariot 80, sous la patte 87. Une pièce de liaison 89, telle qu'un tenon monté entre deux maillons de la chaîne, assure la liaison du chariot 80 et de la chaîne 88. Cette chaîne 88 est tendue entre deux pignons 78, portés par la plaque verticale 71 du chariot vertical 70; l'axe de l'un de ces pignons 78 est couplé à un moteur d'entraînement 58. Ce moteur 58 est lui même couplé, comme le moteur 51 affecté au chariot vertical, à un codeur 59 de type analogue au codeur 55 et traduisant les déplacements du chariot longitudinal.

Le chariot horizontal 90 présente une pièce allongée 91 profilée sensiblement en U couché tout au moins sous le chariot longitudinal 80. Cette pièce est transversale au chariot 70, elle a sa branche supérieure fixée sous la branche horizontale 82 du chariot horizontal. Le chariot comporte, à l'intérieur de la pièce 91 profilée en U, un bras 92 monté coulissant dans une cage de guidage 93, s'étendant sur la longueur de la pièce 91. Ce bras 92 est équipé à l'une de ses extrémités, face aux magasins de stockage en position de repos du bras, d'une tête de préhension d'articles définie par deux ventouses 94 fixées aux extrémités d'une pièce de maintien 95 profilée en cornière. Cette pièce de maintien 95, supportant les ventouses, porte également des conduites non représentées venant mettre en communication la pompe à vide 17 (figure 3) et les ventouses. Elle s'étend avec ses ventouses transversalement et sous le bras 92; des équerres 96 assurent sa liaison sur l'extrémité du bras. La tête de préhension vient ainsi déborder à l'extérieur de la cage de guidage 93, qui présente à cet effet une ouverture longitudinale 97 pour son libre passage, ainsi qu'à l'extérieur de la pièce 91 dont la branche inférieure écourtée en conséquence aboutit simplement au droit de l'ouverture 97, tout en présentant un bord rabattu verticalement vers la tête de préhension.

Ce même bras 92 porte sur une partie intermédiaire, plus proche de sa seconde extrémité opposée à celle équipée de la tête de préhension, une paire de galets de roulement 98. A cette seconde extrémité il porte un galet terminal supplémentaire de guidage 99. Les galets de roulement 98 sont en appui sur le fond horizontal de la cage de guidage 93, de part et d'autre de l'ouverture longitudinale 97. Le galet terminal 99 est par contre normalement en appui sur la paroi supérieure horizontale de la cage, le décalage des galets de roulement 98 vers cette seconde extrémité et le poids de la tête donnant au bras 92 une tendance à pivoter autour de l'axe 98a des galets de roulement pour assurer la mise en appui du galet de guidage 99 sur la paroi supérieure de la cage de guidage 93. Une chaîne d'entraînement, symbolisée en 100, est fixée sur une pièce de liaison 101 montée articulée sur l'axe 98a des galets de roulement 98. Elle est tendue entre deux pignons 102 portés par la pièce 91, à ses extrémités, et est entraînée par l'un de ces pignons dont l'axe est couplé à un moteur 103.

La paroi supérieure de la cage présente une fenêtre 105 dans sa partie terminale opposée à celle faisant face à la colonne de stockage des articles, soit du côté de la porte du distributeur. En amont de cette fenêtre 105, une rampe de guidage arquée 106 prolonge la paroi supérieure horizontale de la cage en formant une pente au-dessus de cette paroi supérieure; sur l'autre côté de la fenêtre 105, l'extrémité de la cage forme, face à la rampe 105, une butée 107 de fin de course du bras. Cette fenêtre 105 permet, lors de l'arrivée du galet de guidage 99 à son niveau, l'escamotage du galet 99 et en conséquence le basculement du bras 92 autour de l'axe 98a des galets de roulement 98 pour le passage dudit bras en position verticale. La butée 107, en fin de course du bras dans la cage 93, assure le maintien du bras en position sensiblement verticale, ainsi qu'il sera vu ci-après au cours des phases de fonctionnement décrit ci-après.

Le chariot horizontal 90 comporte en outre quatre capteurs notés 110, 111, 112 et 113 sur la figure 5 montés le long de la pièce 91 dans laquelle le bras 92 est mobile dans sa cage 93. Ces capteurs sont fixés sur le bord rabattu de la branche inférieure de la pièce 91. Ils sont du type à contact avec le bras 92; ils traduisent les positions du bras le long de sa cage de guidage, de manière analogue aux codeurs associés aux moteurs du chariot vertical et du chariot longitudinal, respectivement. Ils sont chacun affecté à la détection de mise du chariot horizontal 90 dans une position particulière, au cours de son fonctionnement pour la distribution des articles, le capteur 110 étant affecté à la détection de mise en position de repos de ce chariot; ils sont reliés à l'organe de gestion du distributeur pour la commande convenable du moteur 103.

Le fonctionnement du distributeur est donné en se référant essentiellement aux figures 1, 2, 3 et 4 illustrant la structure générale du distributeur et aux figures 5, 7, 8 et 9 illustrant des positions différentes du mécanisme de distribution d'articles au cours de phases du processus d'extraction et de distribution des articles.

Le distributeur étant "hors service", cette indication apparaît dans la fenêtre 26 affectée à cet effet, et la fente 20 d'introduction des pièces est fermée, du fait des commandes délivrées par l'ensemble de gestion 30. La distribution des articles n'est pas possible.

Le distributeur étant "en service", la fente d'introduction des pièces est ouverte. Le distributeur est en état de fonctionnement.

Par la lecture des instructions et des affichages éventuels sur les plaques d'identification d'articles 21a à 24a, l'usager est renseigné sur les types d'articles possibles et leurs prix. La demande de délivrance de l'un des articles est faite par l'introduction de pièces dont la somme s'inscrit au fur et à mesure sur l'afficheur 20a, jusqu'à l'obtention du prix de l'article, puis enfoncement du bouton de sélection de l'article souhaité. Le cycle de distribution de l'article est déclenché dès que le bouton de sélection correspondant est enfoncé, si la somme introduite est égale ou supérieure à la somme due. Dans ces conditions la demande de délivrance de l'article est validée, dans le cas contraire la somme introduite est restituée, sous la commande du circuit de gestion 30.

L'ensemble de gestion 30 délivre les commandes convenables pour le déroulement des phases successives de distribution de l'article. Ces phases se décomposent ainsi:

— le chariot vertical 70 se déplace le long de ses rails 51, si nécessaire, sous la commande de son moteur 52, pour se positionner face à l'intervalle d'accès au magasin concerné; le codeur 55 traduit au fur et à mesure ce déplacement vertical et transmet les informations correspondantes au circuit de gestion qui commande l'arrêt du moteur 52 dès que le positionnement du chariot 70 est correct; dans les figures 3 et 4 la flèche double 7 traduit ce déplacement vertical,

— le chariot longitudinal 80, dont la position de repos est avantageusement au milieu du chariot vertical, se déplace si nécessaire vers la gauche ou la droite du chariot vertical sous la commande de son moteur 58, pour venir se centrer sur le milieu de l'intervalle d'accès au magasin concerné dans le module de stockage à une ou plusieurs colonnes de stockage; le codeur 59 associé au moteur 58 traduit le déplacement effectué et provoque par le circuit de gestion l'arrêt du moteur 58 dès que le positionnement du chariot 80 est correct; dans la figure 3, la flèche double 8 traduit ce déplacement longitudinal,

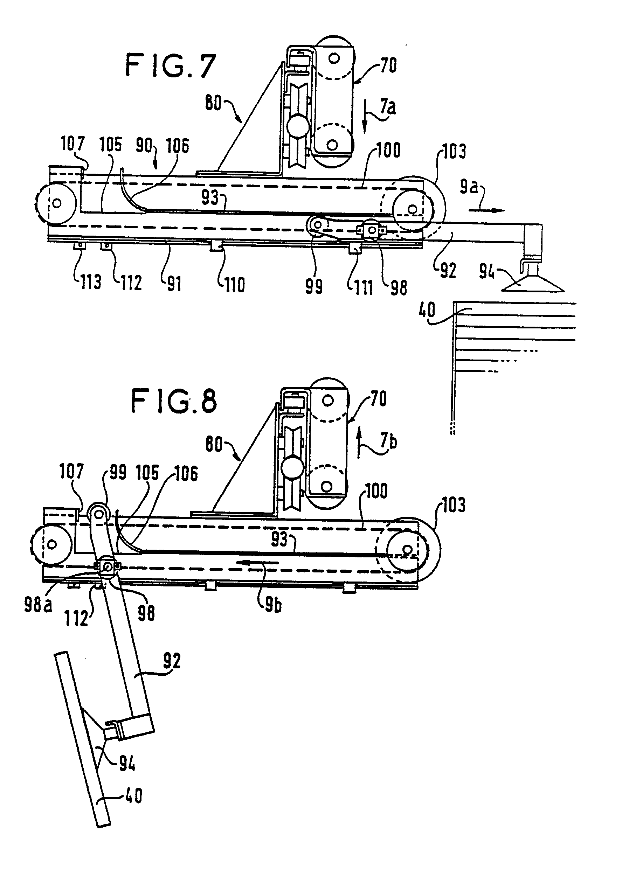

— le chariot horizontal 90, ayant en position de repos (figure 5) son bras 92 horizontal et ses ventouses de préhension devant la colonne de stockage d'articles, c'est-à-dire au niveau de l'extrémité correspondante de sa cage de guidage, se déplace selon la profondeur du magasin pour l'insertion de ses ventouses dans l'intervalle d'accès de ce magasin, au dessus de la pile d'articles qui y sont rangés; ce nouveau positionnement est illustré dans la figure 7, le déplacement correspondant a été effectué selon la flèche 9a par le moteur 103, dont l'arrêt est donné par le capteur 111 dès qu'il n'est plus en contact avec le bras 92,

— le chariot vertical 70 descend à vitesse réduite dans le magasin, selon la flèche 7a de la figure 7, sous la commande transmise à son moteur, pour amener les ventouses 94 du chariot horizontal 90 en contact avec la pile d'articles, désignés par la référence 40, cette position de mise en contact des ventouses avec la pile d'articles est détectée par un capteur (non représenté), associé aux ventouses ou à la tête de préhension, et transmise au circuit de gestion pour l'arrêt du chariot vertical,

— les ventouses 94 sont mises en communication avec la pompe à vide 17 (figure 3) pour l'aspiration de l'article supérieur dans la pile,

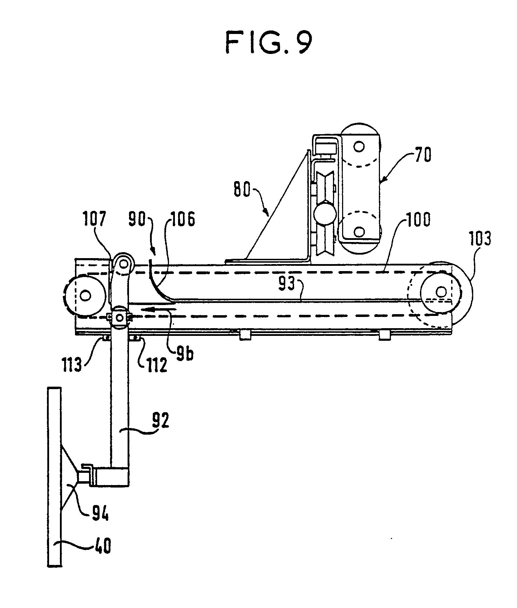

— le chariot vertical 70 remonte selon la flèche 7b et le chariot horizontal 90 se déplace selon la flèche 9b, ainsi que repéré dans la figure 8 pour extraire l'article du magasin et l'entraîner à niveau supérieur à celui de l'entrée de la corbeille 27 (figure 2); au cours de ce déplacement du chariot horizontal le passage du galet 99 dans l'ouverture 105 provoque le basculement du bras 92 devenu, avec l'article 40 accolé à ses ventouses, libre sur l'axe 98a des galets de roulement 98; le basculement du bras 92 en position quasi-verticale est détecté par le capteur 112,

— le chariot longitudinal 80 est, le cas échéant, ramené à sa position de repos,

— le chariot vertical 70 est arrêté, le chariot horizontal 90 poursuit sa course selon la flèche 9b amenant son extrémité à galet 99 en appui contre la butée 107 pour la mise de son bras 92 en position verticale, ainsi qu'illustré dans la figure 9, le capteur 113 détecte cette position et provoque l'arrêt du moteur 103 et la mise en marche du moteur du chariot vertical 70 pour la descente de l'ensemble le long de la porte jusqu'à l'insertion de l'article 40 dans la passage d'entrée de la corbeille; le circuit de gestion coupe la mise sous vide des ventouses, l'article tombe au fond de la corbeille,

— le chariot vertical remonte à sa position de repos, simultanément le chariot horizontal revient à sa propre position de repos, cette dernière étant obtenue avec coopération du galet de guidage 99 et de la rampe arquée 106 provoquant le retour du bras 92 de sa position verticale à sa position horizontale.

Pendant le retour des chariots 70 et 90, à leur position de repos, il y a encaissement des pièces introduites avec rendu de monnaie, le cas échéant, évolution de l'état de celui des compteurs d'articles délivrés 31 à 34, affecté au type d'articles concerné, et de l'état du compteur totalisateur des sommes encaissées 35. Dès le retour des chariots en position de repos, le distributeur est prêt pour une nouvelle distribution.

Pour le chargement du distributeur, le déverrouillage de la porte avant provoque l'entraînement du chariot vertical en position haute, au-dessus de la colonne de stockage, de manière à libérer la face avant de l'armoire.

La présente invention a été décrite en regard du mode de réalisation donné dans les dessins. En particulier, il est évident que si le distributeur est à colonne de stockage unique dans laquelle tous les magasins sont des magasins simples centrés sur l'axe de la colonne, le chariot longitudinal n'a pas lieu de faire partie du mécanisme d'extraction et de délivrance d'articles.

## Revendications

1. Distributeur automatique d'articles (40) plats, comportant, dans une armoire (1) fermée par une porte (2) présentant une corbeille (27) de réception d'articles, une pluralité de magasins de stockage (41 - 44) d'articles, en pile et par type, agencés en au moins une colonne, avec des intervalles d'accès individuels (41a - 44a) entre eux, et des moyens d'extraction et de distribution d'articles comportant eux-mêmes un chariot horizontal (90) monté mobile sur une pièce de guidage (93) pour le prélèvement de l'un des articles et sa délivrance dans ladite corbeille (27), caractérisé en ce que lesdits moyens d'extraction et de distribution d'articles (5) comportent en outre un chariot vertical (70) s'étendant transversalement devant l'ensemble des magasins et monté mobile sur des guides verticaux (51), ledit chariot vertical étant entraîné par un premier moteur (52) et portant ledit chariot horizontal (90), ce dernier étant mobile grace à un second moteur (103) le long d'une pièce de guidage (93) solidaire dudit chariot vertical (70) sur lequel ladite pièce de guidage s'étend transversalement entre la porte (2) et lesdits magasins, une tête de préhension d'articles (94, 95) fixée audit chariot horizontal (90) sur sa partie terminale située du côté desdits magasins, et des moyens (105) de basculement dudit chariot horizontal sur sa pièce de guidage, en fin de course dudit chariot horizontal vers la dite porte (2), pour sa mise en position sensiblement verticale au-dessus de l'entrée des articles dans ladite corbeille (27).

2. Distributeur selon la revendication 1, caractérisé en ce que lesdits moyens d'extraction et de distribution d'articles (5) comportent, en outre, un troisième chariot, dit chariot longitudinal (80) monté mobile sur un axe horizontal de guidage (83) porté par ledit chariot vertical (70), sur lequel ledit axe de guidage s'étend selon sa longueur, et portant ledit chariot horizontal (90), et un troisième moteur (58) d'entraînement dudit chariot longitudinal sur son axe de guidage (83).

3. Distributeur selon l'une des revendications 1 et 2, caractérisé en ce que ledit chariot horizontal (90) est constitué par un bras (92) et que ladite pièce de guidage (93) forme une cage à ouverture longitudinale (97) dans sa surface inférieure pour ladite tête de préhension (94, 95) qui lui est extérieure.

4. Distributeur selon la revendication 3, caractérisé en ce que ledit bras est monté coulissant sur la surface inférieure de ladite cage et est tracté par un moyen d'entraînement (100) couplé audit second moteur (103) et lié en une zone décalée de son centre vers son extrémité opposée à la première extrémité portant la tête de préhension d'articles (94 - 95) et dite seconde extrémité (99), amenant ladite seconde extrémité (99) en butée contre la surface supérieure de ladite cage (93).

5. Distributeur selon la revendication 4, caractérisé en ce que ladite cage (93) présente dans sa surface supérieure une fenêtre (105) d' escamotage de ladite seconde extrémité (99) dudit bras (92), à sa partie terminale du côté de la porte (2), constituant lesdits moyens (105) de basculement dudit chariot horizontal (90).

6. Distributeur selon la revendication 5, caractérisé en ce que ladite fenêtre (105) est limitée du côté de ladite porte (2) par une butée verticale (107) bloquant le chariot horizontal (90) dans sa course le long de ladite cage (93) en position sensiblement verticale.

7. Distributeur selon la revendication 6, caractérisé en ce que ladite fenêtre (105) est limitée à l'opposé de ladite butée verticale (107) par une rampe arquée (106) assurant le retour dudit bras (92) de sa position sensiblement verticale à sa position horizontale.

8. Distributeur selon l'une des revendications 1 et 2, caractérisé en ce que lesdits moteurs (52, 103, 58) sont contrôlés par un circuit de gestion de fonctionnement (30) délivrant des signaux de sélection de l'un des magasins (41 - 44) dans chaque colonne, pour la commande de positionnement desdits moyens d'extraction et de distribution d'articles (5) en regard de l'intervalle d'accès audit magasin concerné, et des signaux de préhension et d'extraction de l'un des articles dudit magasin concerné, pour la commande d'entraînement desdits moyens (5) d'extraction et de distribution d'articles entre l'intervalle d'accès (41a - 44a) audit magasin concerné et ladite corbeille (27) de réception dudit article (40).

9. Distributeur selon la revendication 8, caractérisé en ce que chacun desdits moteurs (52, 58, 103) est associé à un codeur (55, 59, 110 - 113) relié audit circuit de gestion (30) et traduisant les déplacements du chariot (70, 80, 90) entraîné par le moteur concerné.

10. Distributeur selon l'une des revendications 8

13

et 9, caractérisé en ce que ladite tête de préhension d'articles (94, 95) est à ventouses (94) mises en communication avec une pompe à vide (17) sous la commande dudit circuit de gestion (30) et en ce que lesdits intervalles d'accès individuels (41a - 44a) des magasins (41 - 44) sont situés à leur partie supérieure.

11. Distributeur selon la revendication 2, caractérisé en ce que ledit chariot vertical (70) est constitué par une pièce profilée en cornière (71, 72, 73) portant d'une part à chacune de ses extrémités une paire de galets (75) de guidage dans ses rails (51) et une pièce de liaison (76) à une première chaîne d'entraînement (60) couplée audit premier moteur (52) et, d'autre part, sur une partie de sa longueur, ledit axe de guidage (83) dudit chariot longitudinal (80).

12. Distributeur selon la revendication 11, caractérisé en ce que ledit chariot longitudinal (80) est constitué également par une pièce profilée en cornière (81, 82) d'une part portant une première paire de galets (84) de guidage sur ledit axe de guidage (83) et une seconde paire de galets de guidage (86) sur le profilé dudit chariot vertical (70) et d'autre part reliée à une seconde chaîne d'entraînement (88) couplée audit troisième moteur (59).

## Patentansprüche

1. Ausgabeautomat für flache Artikel (40) mit einer Vielzahl von zur Lagerung der Artikel im Stapel und nach Artikelart bestimmten Magazinen (41 - 44), die in mindestens einer einzelnen Säule unter Belassung von Zwischenräumen (41a - 44a) für den individuellen Zugriff angeordnet und in einem Schrank (1) untergebracht sind, der durch eine Tür (2) mit einem Aufnahmekorb (27) für die Artikel verschlossen ist, und mit Mitteln zur Entnahme und Ausgabe der Artikel, die ihrerseits einen Horizontalwagen (90), welcher beweglich auf einem Führungselement (93) montiert ist, zur Entnahme eines einzelnen Artikels und Ablage desselben im Aufnahmekorb (27) aufweisen, dadurch gekennzeichnet, daß die Mittel (5) zur Entnahme und Ausgabe der Artikel weiter einen Vertikalwagen (70) aufweisen, der sich quer vor der Gesamtheit der Magazine erstreckt und auf senkrechten Führungen (51) montiert ist, wobei der Vertikalwagen durch einen ersten Motor (52) angetrieben wird und den Horizontalwagen (90) trägt, der seinerseits durch einen zweiten Motor (103) entlang eines Führungselements (93) bewegt wird, das fest mit dem Vertikalwagen (70) verbunden ist, über den sich das Führungselement quer zwischen der Tür (21) und den Magazinen erstreckt, und daß die Mittel (5) weiter einen Kopf (94, 95) zum Greifen der Artikel, welcher auf dem magazinseitigen Endabschnitt des Horizontalwagens (90) befestigt ist, sowie Mittel (105) zum Schwenken des Horizontalwagens um sein Führungselement am Ende seines Lauf-

14

weges auf die Tür (2) zu aufweisen, um den Wagen in die im wesentlichen senkrechte Lage oberhalb des Eingangs der Artikel in den Aufnahmekorb (27) zu bringen.

2. Ausgabeautomat nach Anspruch 1, dadurch gekennzeichnet, daß die Mittel (5) zu Entnahme und Ausgabe von Artikeln (5) weiter einen dritten Wagen, Längswagen (80) genannt, der beweglich auf einer waagrechten Führungsachse (83) montiert ist, welche vom Vertikalwagen (70) getragen wird und über den sich die Führungsachse der Länge nach erstreckt, wobei sie den Horizontalwagen trägt, und einen dritten Motor (58) zum Bewegen des Längswagens entlang seiner Führungsachse (83) aufweisen.

3. Ausgabeautomat nach einem der Ansprüche 1 und 2, dadurch gekennzeichnet, daß der Horizontalwagen (90) aus einem Arm (92) besteht, und das Führungselement (93) einen Käfig mit Längsöffnung (97) in der unteren Oberfläche für den Greifkopf (94, 95) bildet, der sich außerhalb derselben befindet.

4. Ausgabeautomat nach Anspruch 3, dadurch gekennzeichnet, daß der Arm über der unteren Oberfläche des Käfigs gleitend montiert ist und von einem Antriebsmittel (100) gezogen wird, das an den zweiten Motor (103) angekoppelt und an den Arm in einem Bereich angeschlossen ist, der von seiner Mitte in Richtung auf jenes Ende verschoben ist, zweites Ende (99) genannt, welches dem ersten Ende, das den Artikel-Greifkopf (94 - 95) trägt, entgegengesetzt ist, und das zweite Ende (99) zum Anschlag an der oberen Oberfläche des Käfigs (93) bringt.

5. Ausgabeautomat nach Anspruch 4, dadurch gekennzeichnet, daß der Käfig (93) in seiner oberen Oberfläche im Endabschnitt an der Seite der Tür (2) ein Fenster (105) zum Wegschwenken des zweiten Endes (99) des Arms (92) besitzt, das das Mittel (105) zum Schwenken des Horizontalwagens (90) bildet.

6. Ausgabeautomat nach Anspruch 5, dadurch gekennzeichnet, daß das Fenster (105) auf Seiten der Tür (2) durch einen senkrechten Anschlag (107) begrenzt ist, der den Horizontalwagen (90) in seinem Laufweg entlang des Käfigs (93) in der im wesentlichen senkrechten Lage blockiert.

7. Ausgabeautomat nach Anspruch 6, dadurch gekennzeichnet, daß das Fenster an dem dem senkrechten Anschlag (107) entgegengesetzten Ende durch eine bogenförmige Rampe (106) begrenzt ist, die die Rückkehr des Arms (92) aus seiner im wesentlichen senkrechten Lage in die waagrechte Lage bewirkt.

8. Ausgabeautomat nach einem der Ansprüche 1 oder 2, dadurch gekennzeichnet, daß die Motoren (52, 103, 58) von einer Betriebssteuerschaltung (30) gesteuert werden, die Signale zum Auswählen eines der Magazine (41 - 44) in jeder Säule und zur Steuerung der Lageeinstellung der Mittel (5) zur Entnahme und Ausgabe von Artikeln gegenüber dem Zugriffszwischenraum zu dem betreffenden Magazin, sowie Signale zum Greifen und Entnehmen eines der Artikel aus dem betreffenden Magazin und zur Steuerung der Antriebsbewegung der Mittel (5) zur Entnahme und Ausgabe von Artikeln zwischen dem Zugriffszwischenraum (41a - 44a) des betreffenden Magazins und dem Aufnahmekorb (27) für den Artikel (40) liefert.

9. Ausgabeautomat nach Anspruch 8, dadurch gekennzeichnet, daß jeder der Motoren (52, 58, 103) mit einem Kodierer (45, 59, 110 - 113) in Verbindung steht, der an die Steuerschaltung (30) angeschlossen ist und die Verschiebungen des von dem jeweiligen Motor angetriebenen Wagens (70, 80, 90) verschlüsselt.

10. Ausgabeautomat nach einem der Ansprüche 8 und 9, dadurch gekennzeichnet, daß der Artikel-Greifkopf (94, 95) Saugfüße (94) besitzt, die aufgrund eines Steuerbefehls der Steuerschaltung (30) mit einer Vakuumpumpe (17) in Verbindung gebracht werden, und daß die Zwischenräume (41a - 44a) für den individuellen Zugriff zu den Magazinen (41 - 44) sich in deren oberen Teil befinden.

11. Ausgabeautomat nach Anspruch 2, dadurch gekennzeichnet, daß der Vertikalwagen (70) aus einem Winkelprofilelement (71, 72, 73) besteht, das einerseits an jedem seiner Enden ein Paar von Führungsrollen (75) auf seinen Schienen (51) sowie ein Verbindungsstück (76) mit einer ersten Antriebskette (60) trägt, die an den ersten Motor (52) angekoppelt ist, und das andererseits über einen Teil seiner Länge die Führungsachse (83) des Längswagens (80) trägt.

12. Ausgabeautomat nach Anspruch 11, dadurch gekennzeichnet, daß der Längswagen (80) ebenfalls aus einem Winkelprofilelement (81, 82) besteht, das einerseits ein erstes Paar von Führungsrollen (84) auf der Führungsachse (83) sowie ein zweites Paar von Führungsrollen (86) auf dem Profilelement des Vertikalwagens (70) trägt, und andererseits mit einer zweiten Antriebskette (88) verbunden ist, die an den dritten Motor angekoppelt ist.

**Claims**

1. A vending machine for flat articles (40), said vending machine comprising, in a cabinet (1) closed by a door (2) which has an article-receiving basket (27), a plurality of article storage magazines (41 to 44) which store the articles in stacks according to type the magazines being arranged in at least one column with individual access gaps (41a to 44a) between them, and article extraction and delivery means which themselves comprise a horizontal carriage (90) for lifting one of said articles and delivering it into said basket (27), said carriage being moveably mounted on a guide part (93), said vending machine being characterized in that said article extraction and delivery means (5) also comprise a vertical carriage (70) extending transversely in front of the magazine assembly and moveably mounted on vertical guides (51), said vertical carriage being driven by a first motor (52) and carrying said horizontal carriage (90), the latter being moveable by a second motor (103) along a guide part (93) integral with said vertical carriage (70) on which said guide part extends transversely between the door (2) and said magazines an article gripping head (94, 95) secured to said horizontal carriage (90) at its end portion adjacent said magazines, and means (105) for pivoting said horizontal carriage on its guide part, at the end of the travel of said horizontal carriage towards said door (2), so as to place the carriage in a substantially vertical position above the article entry of said basket (27).

2. A vending machine according to claim 1, characterized in that said article extraction and delivery means (5) also comprise a third carriage, called the longitudinal carriage (80) moveably mounted on a horizontal guide spindle (83) carried by and extending lengthwise across said vertical carriage (70), said longitudinal carriage carrying said horizontal carriage (90), and a third motor (58) which drives said longitudinal carriage on its guide spindle (83).

3. A vending machine according to claim 1 or claim 2, characterized in that said horizontal carriage (90) is constituted by an arm (92) and in that said guide part (93) forms a cage with a longitudinal opening (97) in its lower surface for said gripping head (94, 95) which protrudes outside said guide part.

4. A vending machine according to claim 3, characterized in that said arm is slideably mounted on the lower surface of said cage and is driven by a drive means (100) which is coupled to said second motor (103) and which is connected at a zone displaced from the center of the arm towards the end (called the second end 99) opposite to the first end carrying the article gripping head (94, 95), said drive means (100) causing said second end (99) to bear against the upper surface of said cage (93).

5. A vending machine according to claim 4, characterized in that said cage (93) has in its upper surface at its end part adjacent the door, a window (105) into which said second end (99) of said arm (92) can retract, this constituting said means (105) for pivoting said horizontal carriage (90).

6. A vending machine according to claim 5, characterized in that said window (105) is bounded on the side adjacent said door (2) by a vertical endstop (107) which locks the horizontal carriage

17

(90) in a substantially vertical position in its travel along said cage (93).

7. A vending machine according to claim 6, characterized in that said window (105) is bounded at the side opposite to said vertical endstop (107) by a ramp (106) which ensures the return of the arm (92) from its substantially vertical position to its horizontal position.

8. A vending machine according to claim 1 or claim 2, characterized in that said motors (52, 103, 58) are controlled by an operation control unit (30) which provides signals for selecting one of the magazines (41 to 44) in each column, for commanding the position of said article extraction and delivery means (5) to be opposite the access gap of the magazine concerned, and signals for gripping and extracting one of the articles from the magazine concerned, for controlling the driving of said article extraction and delivery means (5) between the access gap (41a to 44a) of the magazine concerned and said receiving basket (27) for said article.

9. A vending machine according to claim 8, characterized in that each of said motors (52, 58, 103) is associated with an encoder (55, 59, 110 to 113) which is connected to said control circuit (30) and which indicates the displacement of the carriage (70, 80, 90) driven by the motor concerned.

10. A vending machine according to claim 8 or claim 9, characterized in that said article gripping head (94, 95) has suction cups (94) which are placed in communication with a vacuum pump (17) by a command from said control circuit (30) and in that said individual access gaps (41a to 44a) are situated in the upper part of the corresponding magazine (41 to 44).

11. A vending machine according to claim 2, characterized in that said vertical carriage (70) is constituted by an angled elongate part (71, 72, 73) which carries at one of its ends a pair of rollers (78) for guiding the carriage in the rails (51) and a connecting part (76) which is secured to a first drive chain (60) coupled to said first motor (52), said part (71, 72, 73) also carrying over part of its length said guide spindle (83) for said longitudinal carriage (80).

12. A vending machine according to claim 11, characterized in that said longitudinal carriage (80) is also constituted by an angled elongate part (81, 82) which carries a first pair of guide rollers (84) which roll on said guide spindle (83) and a second pair of guide rollers which slide on the elongated part of said vertical carriage (70), said part (81, 82) also being connected to a second drive chain (88) coupled to said third motor (59).

# FIG.1

# FIG. 2

# FIG.3

## FIG.4

FIG.5

# FIG.6

# FIG.7

107 105 90 106
80
70
7a
100 103
9a
93
113 112 91 110 99 111 98 92 94
40

# FIG.8

107 99 105 106
80
70
7b
100 103
93
9b
98a 112 98
92
94
40

# FIG.9